# EUROPEAN PATENT SPECIFICATION

(11) **EP 1 057 612 B1**
(45) Date of publication and mention of the grant of the patent: **27.11.2002**
(21) Application number: 99304003.9
(22) Date of filing: 24.05.1999
(51) Int. Cl.: B29C 47/64, B29C 47/38

(54) **Extruder screw with internal axial bore for melt transport**
Extruderschnecke mit einer Innen-Axialbohrung zum Schmelzetransport
Vis d'extrusion avec un alésage axial interne pour le transport de matière fondue

(43) Date of publication of application: 06.12.2000
(73) Proprietor: Barr, Robert A., Virginia Beach, Virginia 23451 (US)
(72) Inventor: Barr, Robert A., Virginia Beach, Virginia 23451 (US)
(74) Representative: Pacitti, Paolo

(56) References cited:
- US-A- 3 358 327
- US-A- 3 497 582
- US-A- 3 689 182
- US-A- 3 730 492

## Description

### BACKGROUND OF THE INVENTION

### Field of the Invention

The present invention relates to a screw type extruder for melting solid polymer materials. More specifically, the invention relates to a screw extruder that transforms solid polymer materials to a melted fluid material by contact of the solid polymer materials with a heated surface. The heated surface is provided with a plurality of circumferentially-spaced, axially extending, radial slots such that the fluid material passes outwardly or inwardly through the radial slots and is removed from the heated surface to ensure that the heated surface remains in close contact with the unmelted solid polymer material at all times for improved heat transfer.

### Related Art

Devices for converting solid thermoplastic materials to a melted condition are well known in the art. Known devices for use in manufacturing plastic products utilize, in one form or another, an extrusion device to melt, mix, and pump molten polymer for further processing. A commonly used extruder is known as a single screw extruder. A typical extruder mechanism of the single screw extruder type utilizes a heated barrel, a helical auger or plasticating screw within the barrel and feed throat. The screw is rotated by conventional means. The melting of the plastic is accomplished by heat conduction and shear energy dissipation at the inside wall of the barrel. The shear energy is generated as a result of relative motion between the packed solid polymer particles in the screw channel (solid bed) and the heated stationary barrel surface. As the solid polymer particles are melted, a layer of melt is formed on the barrel's inner circumferential surface, which is continuously wiped off by the screw thread or flight. Barrier type screws are also known for use in the single screw extruder wherein the external thread of the screw includes a rear side portion of full thread radius and a leading side portion of smaller radius, between which a groove is formed. The barrier screw provides an improved means for separating the melt from the solid bed in order to increase the efficiency and quality of the melt.

In U.S. Patent No. 3,689,182 to Kovacs, a screw extruder is shown wherein the polymer melt is bled radially inwardly into a central axial bore containing a second coaxial screw. In Kovacs, radial holes of 1/8 inch diameter are distributed along the leading face of the thread of the external screw at uniform angular spacings to dispose six or eight radial openings per turn of the thread. In Kovacs, the assumption is made that the polymer melt forms in a small pool along the leading side of the thread on the external screw. Hence, Kovacs states that satisfactory removal of the melt is obtained with openings of 1/8 inch in diameter distributed serially along the leading face of the thread. In the embodiment shown in Kovacs employing a barrier type screw having a rearward portion of full thread radius and a leading side portion of a smaller radius of thread, Kovacs assumes that a spiral thermoplastic body will develop along the full length and volume of the channel defined by the thread. Melted material is only removed from the channel by radial holes positioned serially along the groove defined between the rearward and leading side portions of the thread. Thus, a continuous layer of melted polymer is allowed to form along the entire circumferential extent of the spiral channel defined by the thread, with the melt only being bled off at the leading edge of the thread.

In prior art screw-type extruders, such as the Kovacs extruder, the thickness of the melt film formed along the inside of the heated barrel directly affects the efficiency and rate of melting since the heat developed by dissipation of shear energy between the solid polymer and the barrel is reduced. This reduction in melting rate is especially important on large extruders wherein the circumferential length of the solid bed is very large.

### SUMMARY OF THE INVENTION

According to the present invention, there is provided an extruder having a heated barrel, a screw surrounded and enclosed by the barrel and having a central axis, an internal axial bore and a plurality of circumferentially spaced curved spiral upstream threads extending externally along a portion of the screw, characterized by external linear threads downstream of the upstream threads and which are substantially parallel to the central axis of the screw.

There is described a device for transforming solid thermoplastic materials into fluid material by contact with a surface, wherein melting of the thermoplastic material is caused by heat conduction and shear energy dissipation. The shear energy is created by relative motion between the solid polymer material and a surface, and the surface is provided with a plurality of circumferentially spaced, axially extending, radial slots therethrough such that melted polymer material can pass through the surface into an area for storage or removal. The provision of circumferentially spaced, axially extending, radial slots allows the surface to remain in close contact with the solid material at all times by providing means for draining off melted polymer at several locations around the circumference. Hence, the layer of melt interfaced between the solid polymer material and the surface is kept very thin, thus improving heat transfer and shear energy dissipation.

In one embodiment, there is described an external barrel that is heated by heating coils, an internal screw, and a floating cylindrical sleeve having a plurality of circumferentially spaced, axially extending, radial slots therethrough located between the external barrel and the internal screw. The internal screw comprises a central core and an external thread so interrelated in cooperation with the floating cylindrical sleeve as to define a continuous spiral channel between the screw core and the floating cylindrical sleeve. The portion of the spiral channel located radially inwardly from the heating coils constitutes a melt section that includes a substantial portion of the length of the channel and that terminates adjacent the front or material discharging end of the screw. The thread and the core of the screw can be shaped through the melt section proceeding in the direction of material advancement to progressively decrease the depth of the spiral channel without substantial change in its width. As a result there is a corresponding progressive decrease in the cross sectional area of solid polymer material contained in the spiral channel as it advances toward the discharge end of the screw. The coaxial sleeve fits between the external barrel and the internal screw. The coaxial sleeve has helical flights or threads cut into its outer circumferential surface, and circumferentially spaced axially extending radial slots cut through to the inside circumferential surface of the coaxial sleeve.

The floating cylindrical sleeve is coaxial with the inner screw and the external barrel. The sleeve is constrained from axial movement, but is free to rotate. The speed of rotation of the sleeve is a function of the radial clearances between the sleeve and the inner screw and between the sleeve and the external barrel. The shear stress generated by the solid polymer material and melted material contacting the inner circumferential surface of the floating sleeve causes the sleeve to rotate in the same direction as the inner screw. Shear stress is also developed in the melted polymer that has passed through the floating sleeve at the interface between the melted polymer and the external barrel. This shear stress retards rotation of the floating sleeve to a speed less than that of the inner screw. The difference in rotational velocity between the inner screw and the coaxial sleeve generates the shear stress and resultant heat energy that helps to melt the polymer at the outer diameter of the internal screw. The axially extending, radial slots through the cylindrical floating sleeve are spaced around the circumference of the sleeve such that the circumferential distance between the slots is considerably less than the circumferential distance of melt film formed on conventional or even barrier type extruder screws.

In one embodiment, the external barrel is provided with internal threads that serve to wipe the melt film off the external circumferential surface of the cylindrical floating sleeve and move the melt to the discharge end of the extruder screw. Alternatively, the cylindrical floating sleeve is provided with external threads and the barrel is provided with a smooth internal surface. A further embodiment comprises a cylindrical floating sleeve with a smooth external surface, a surrounding barrel with a smooth internal surface and a separate spiral member located between the floating sleeve and the barrel defining a channel along which the melted polymer is moved toward the discharge end of the extruder. Additional embodiments can include means for rotating either the barrel, the cylindrical floating sleeve, and/or the separate spiral member in order to provide the advantage of more complete control over the relative rotational velocities of the parts of the extruder screw for optimum performance.

A further embodiment comprises an external barrel and a coaxial internal screw having external threads that fit closely to the inner circumferential surface of the barrel, wherein the internal screw is provided with an internal axial bore for the removal of the melted polymer material. The internal screw is also provided with multiple external threads such that a plurality of continuous spiral channels are formed along the external surface of the screw to move the solid polymer materials along the screw. In this embodiment, the screw flights or threads extend axially substantially parallel to the screw axis over a substantial length of the melt section in the extruder screw. Axially extending radial slots through the screw are provided at the leading edge of the axial screw flights or threads, providing passageways into the center axial bore through the screw.

The circumferential spacing of the radial slots through the internal screw is determined by the number of axial threads provided on the screw. The pressure created by the flow of melted polymer into the center axial bore of the screw forces the melt along the axial extent of the bore until it exits from the discharge end of the extruder screw. The force to keep the solid polymer material moving along the axial threads in the melt section of the extruder screw is provided by the beginnings of the threads in the feed section which are provided with a helix angle.

In a further embodiment, the internal screw can be provided with a plurality of internal axial bores providing multiple passageways for movement of the polymer melt to the discharge end of the extruder screw. These multiple internal axial bores are arranged in a circular pattern a short distance below the surface of the screw such that the depth of the radial slots passing from the screw channel to an associated internal axial bore is kept short. The number of screw threads provided along the internal screw equals the number of internal axial bores for moving polymer melt to the discharge end of the extruder screw. The radial slots pass from the leading edge of each screw thread radially inwardly to an associated internal axial bore.

### BRIEF DESCRIPTION OF THE DRAWINGS

The invention is better understood by reading the following detailed description of the preferred embodiments with reference to the accompanying drawings figures, in which like reference numerals refer to like elements throughout, and in which:
Fig. 1 is a side elevation view of a first embodiment of the present invention having a driven outer rotating barrel and a stationary melting sleeve, showing the hopper for feeding solid polymer material into the main internal screw;
Fig. 2 is a side elevation view in partial cross-section and broken away to show the main internal screw inside of the stationary melting sleeve of the Fig. 1 embodiment;
Fig. 3 is a side elevation view of a cylindrical melting sleeve according to the first embodiment of the present invention;
Fig. 3A is a cross-sectional view taken in the direction of arrows A-A in Figure 3;
Fig. 4 is a side elevation view in partial cross-section of a second embodiment of the present invention having a rotating melting sleeve, a rotating internal screw and a stationary outer barrel;
Fig. 5 is a side elevation view in partial cross-section of a third embodiment of the present invention having rotating flights or threads and a rotating internal screw with a stationary melting sleeve and a stationary external barrel;
Fig. 6 is a side elevation view in partial cross-section of a fourth embodiment of the present invention having a rotating internal screw and a rotating threaded barrel and a stationary cylindrical melting sleeve;
Fig. 7 is a side elevation view in partial cross-section of a fifth embodiment of the present invention similar to the embodiment shown in Fig. 6 and having a rotating internal screw, a rotating threaded barrel, and a stationary porous cylindrical melting sleeve;
Fig. 8 is a side elevation view in partial cross-section of the sixth embodiment of the present invention which has a rotating internal screw, a rotating threaded barrel, and a stationary slotted melting sleeve;
Fig. 8A is a cross-sectional view taken in the direction of arrows A-A in Fig. 8;
Fig. 9 is a side elevation view of rotatable flights or threads such as used in the third embodiment illustrated in Figure 5;
Fig. 10 is a side elevation view of a slotted melting sleeve similar to the slotted melting sleeve used in the fourth embodiment illustrated in Fig. 8, except for the fact that the slots extend continuously along the entire melting section rather than consist of a series of discrete, axially spaced slot as in Fig. 8;
Fig. 11 is a side elevation view of an internal screw used in a sixth embodiment of the present invention which has eight circumferentially-spaced, axially extending threads along the melt section of the screw, with eight radial slots extending from the leading edge of each of the threads into one of eight internal axial bores provided through the screw;
Fig. 12 is a cross-sectional view taken in the direction of arrows 12-12 in Fig. 11;
Fig. 13 is a cross-sectional view taken in the direction of arrows 13-13 in Fig. 11;
Fig. 14 is a side elevation view of an internal screw used in a seventh embodiment of the present invention and having four axially extending threads extending along a melt section of the screw with radial slots extending from the leading edge of each the four threads into one of four internal axially parallel bores extending through the screw;
Fig. 15 is a cross-sectional view taken in the direction of arrows 15-15 in Fig. 14;
Fig. 16 is a side elevation view of an internal screw and its associated barrel shown in section used in an eighth embodiment of the present invention having four axially extending threads provided along the melt section of the screw with spaced, axially extending, radial slots passing from the leading edge of each of said threads into a single central axial bore;
Fig. 17 is a cross-sectional view taken in the direction of arrows 17-17 in Fig. 16;
Fig. 18 is a cross-sectional view taken in the direction of arrows 18-18 in Fig. 16;
Fig. 19 is a cross-sectional view taken in the direction of arrows 19-19 in Fig. 16;
Fig. 20 is a side elevation view of a screw used in a ninth embodiment of the present invention having four axially extending threads along a melt section of the screw and having a barrier flight or thread provided along the length of the axial portion of each of the threads, with axially extending, radial slots passing from the groove between the barrier thread and the main thread into a single central axial bore of the screw;
Fig. 21 is a cross-sectional view taken in the direction of arrows 21-21 in Fig. 20;
Fig. 22 is a cross-sectional view taken in the direction of arrows 22-22 in Fig. 20;
Fig. 23 is a cross-sectional view taken in the direction of arrows 23-23 in Fig. 20;
Fig. 24 is a side elevation view of an internal screw used in a tenth embodiment of the present invention having eight axially extending threads along the melt section of the screw wherein each of the threads is formed by a separate insert that is inserted into a tapered radial slot extending into one of eight internal axial bores;
Fig. 25 is a cross-sectional view taken in the direction of arrows 25-25 in Fig. 24;
Fig. 26 is a cross-sectional view taken in the direction of arrows 26-26 in Fig. 24;
Fig. 27 is a side elevation of a ninth embodiment which is similar to the embodiment of Fig. 16 but differs therefrom in that the screw has spiral upstream spiral threads which terminate upstream of the upstream ends of the radial threads so as to provide a threadless space immediately upstream of the radial threads;
Fig. 27A is a sectional view taken along lines 27A-27A of Fig. 27;
Fig. 27B is a sectional view taken along lines 27B-27B of Fig. 27;
Fig. 27C is a partial sectional view of the screw of Fig. 27 illustrating the internal construction of the screw; and
Fig. 27D is a sectional view taken along lines 27D-27D of Fig. 27C.

### DETAILED DESCRIPTION OF THE PREFERRED EMBODIMENTS

In describing preferred embodiments of the present invention illustrated in the drawings, specific terminology is employed for the sake of clarity. However, the invention is not intended to be limited to the specific terminology so selected, and it is to be understood that each specific element includes all technical equivalents which operate in a similar manner to accomplish a similar purpose.

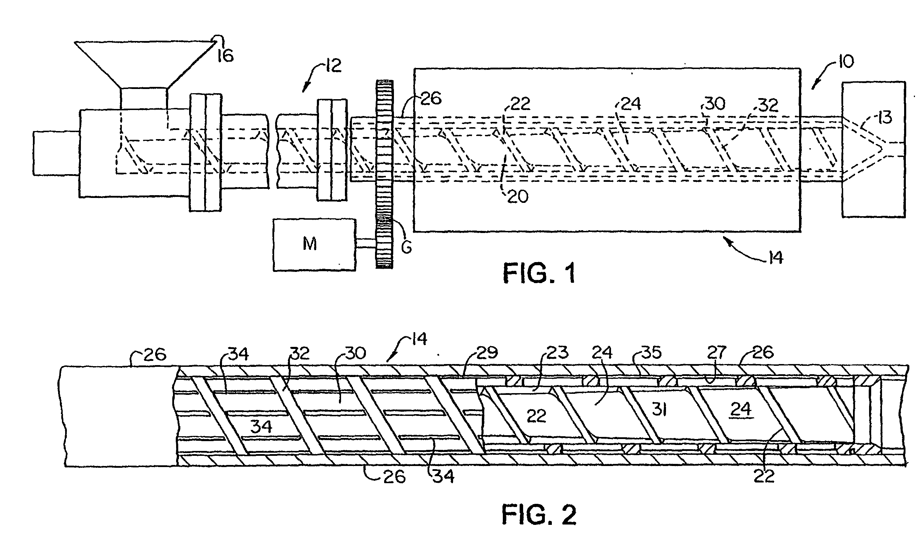

Referring initially to Figure 1 of the drawings, the first embodiment of the present invention is shown. This embodiment includes an extruder screw assembly 10, an infeed section 12 and a melt section 14. A hopper 16 is provided in the infeed section 12 for directing solid polymer material in pellet or the like form to a central screw 20 having a spiral thread 22 of uniform pitch and a tapered core 24 which increases in diameter in the direction from the feed section 12 to the melt section 14. The spiral thread 22 is formed with a uniform outer radius for mating operation within a floating cylindrical melting sleeve 30 that is, in turn, surrounded by an outer barrel 26. Cylindrical melting sleeve 30 can be provided with external outwardly extending threads, or alternatively, barrel 26 can be provided with internal inwardly extending threads. The resulting annular gap between the outer circumferential surface 29 of floating cylindrical sleeve 30 and the inner circumferential surface 27 of barrel 26 constitutes a spiral feed channel 23 along which melted polymer passes and finally exits from the extruder screw through passageways 13 (Fig. 1).

Referring to Figure 2, the melt section of an embodiment of the present invention is shown wherein cylindrical melting sleeve 30 is provided with an external thread 32 and a plurality of circumferentially spaced, axially extending, radial slots 34 that pass through the cylindrical melting sleeve, thus providing communication between the tapered internal main screw core 24 and the spiral feed channel 23 between barrel 26 and floating sleeve 30. Slots 34 have a length/width ratio that is greater than 1.

As the solid polymer material is melted, it forms a melt film along the internal circumferential surface 31 of melting sleeve 30. Because the creation of such a melt film along the surface 31 of melting sleeve 30 reduces the generation of shear energy created by the relative motion between the melting sleeve and the solid polymer materials, it is desired to drain off the melt material at frequent intervals axially and circumferentially along and about feed channel 23. Such drain off is provided by axially extending radial slots 34 passing through floating sleeve 30 at circumferentially and axially spaced intervals such that any melt film formed along the internal circumferential surface of floating sleeve 30 is quickly removed and passes through the floating sleeve to the annular space 35 (Fig. 2) between the floating sleeve and the internal circumferential surface of barrel 26. External threads 32 on floating sleeve 30 then move the melt material along the axial extent of melt section 14 until the melt material is ejected through passageways 13 at the discharge end of the extruder screw 10.

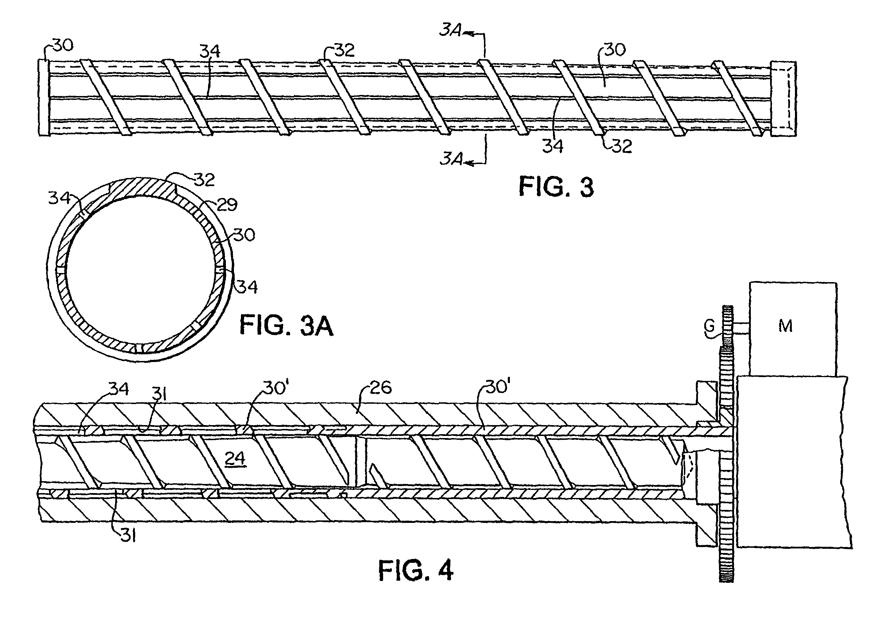

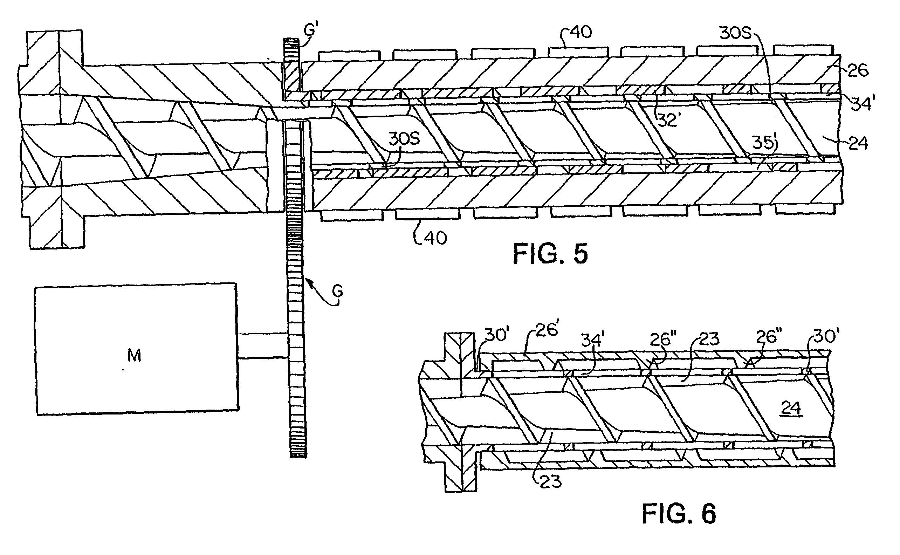

The second embodiment which is illustrated in Fig. 4, employs a driven melting sleeve 30' which is identical to floating sleeve 30 expect for the fact that driven sleeve 30' is rotated about its axis in fixedly positioned barrel 26 by conventional means, such as a motor M and gear train G as shown. Internal driven screw 24 is also driven to rotate about its axis to provide a continuous flow of solid polymer material in the form of pellets, powder, chips, or the like, from hopper 16 along feed channel 23 formed between the thread 22 of tapered internal screw 24 and the internal circumferential surface 31 of cylindrical melting sleeve 30'. Heating of the solid polymer material passing through feed channel 23 is achieved by heating conventional bands not shown in Fig. 4 but provided around the outer circumference of barrel 26 in the manner of bands 40 shown in Figure 5, and by shear energy dissipation created by the relative motion between the solid polymer in feed channel 23 and the internal circumferential surface 31 of melting sleeve 30'.

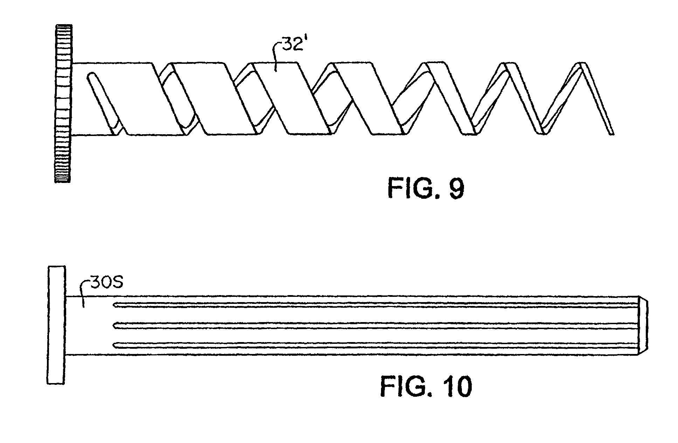

Referring to Figure 5, an alternative third embodiment of the present invention is shown wherein a stationary melt sleeve 30S is provided between tapered internal screw 24 and a driven rotating thread 32' (Fig. 9) that is driven by gear G' of gear train G and has a radially outer surface 27 closely fitted with the internal circumferential surface of barrel 26. Solid polymer material is passed along channel 23 between screw 24' and stationary melt sleeve 30S and the melt polymer passes radially outwardly through axially extending, radial slots 34' of stationary sleeve 30S into the annular gap 35' between stationary melt sleeve 30' and surface 27 or barrel 26. Rotating thread 32' is rotated to drive the melt material along this annular gap and expel it from the discharge end of the extruder screw.

An alternative fourth embodiment is shown in Figure 6, wherein barrel 26' is provided with internal threads 26" and is rotated by motor means. Melt sleeve 30S is held stationary, and rotary internal screw 24 is rotated by motor means. Radial slots 34' extended through stationary melt sleeve 30' and provided means for draining off stationary melt formed along the inner circumferential surface of stationary melt sleeve 30'. As solid polymer particles pass along the spiral channel 23, melted polymer is prevented from accumulating over a circumferential distance along the inner circumferential surface of melt sleeve 30' any greater than the circumferential distance between radial slots 34'. Thus, the total surface area in contact with solid polymer is increased, and the amount of heat generated by shear energy dissipation is increased, with a resultant increase in the melting rate of the polymer over the melting rate in conventional extruder screws, such as the one shown in Kovacs '182 patent.

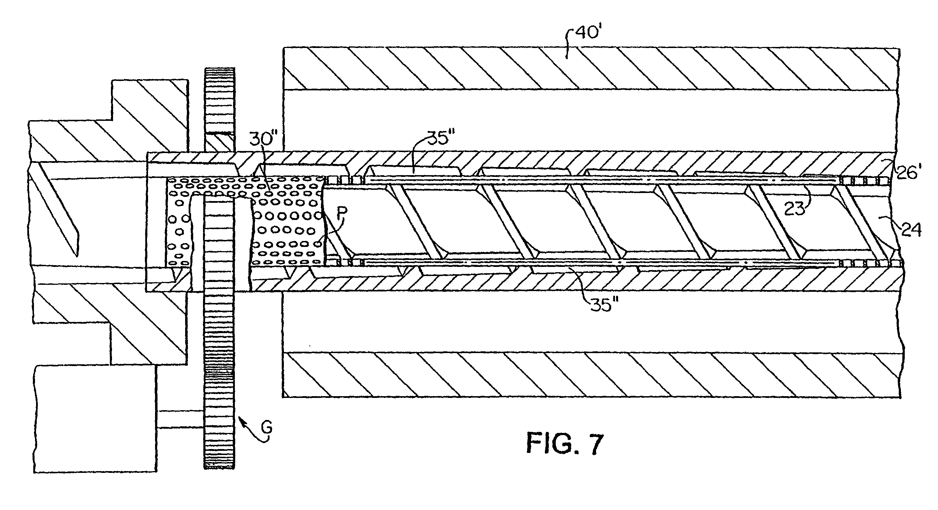

A further alternative or fifth embodiment is shown in Figure 7, wherein fixed melt sleeve 30" is provided with a plurality of radial pores or ports P therethrough for passage of the melt polymer from feed channel 23 of rotary internal screw 24 into the annular gap 35" between melt sleeve 30" and barrel 26' for removal from the extruder mechanism. It should be noted that annular gap 35" progressively decreases in dimension from the infeed (left) end to the outfeed (right) end of the device as shown in Figure 7. Heating of the polymer material is provided by a heater 40' in addition to the heat resultant from the shear energy generated by relative motion between the solid polymer in channel 23 and the internal circumferential surface of melt sleeve 30".

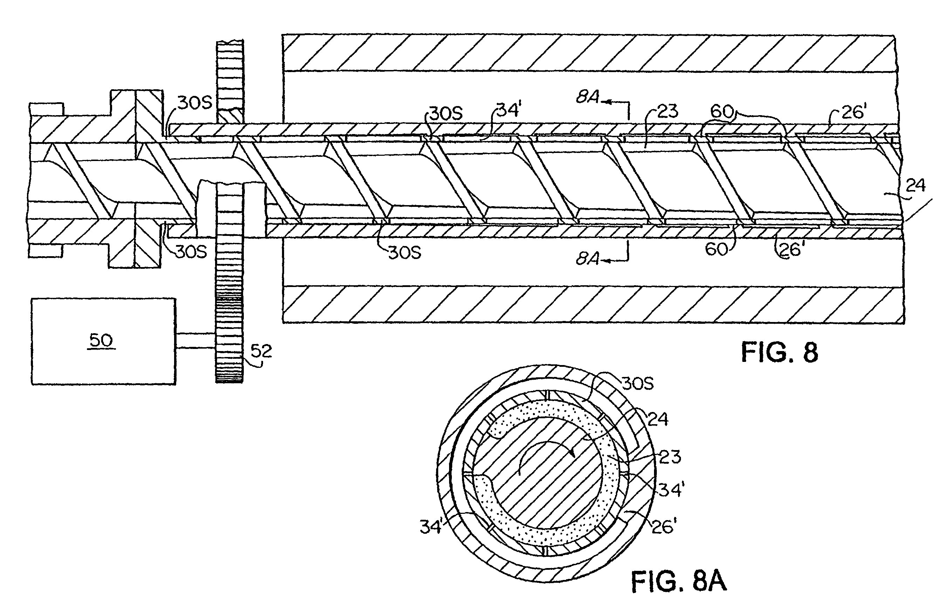

Figures 8 and 8A show a sixth embodiment similar to the embodiment shown in Figure 6, wherein the means for driving rotary barrel 26' comprises a motor 50 and gear train 52. As in Figure 6, a stationary melt sleeve 30S, details of which are shown in Fig. 10, is provided with an outer surface having a diameter such that it fits closely with the inner surface of the internal threads 60 on barrel 26'. The wall thickness of barrel 26' is decreased toward the discharge end of the extruder screw while maintaining a constant inner or minor diameter for the internal threads 60 of the barrel in order to provide for a progressively increasing root depth of the internal threads 60, thus progressively increasing the cross sectional area of channel available for moving melted polymer towards the discharge end. Circumferentially spaced, axially extending, radial slots 34' provided passageways through melt sleeve 30S from feed channel 23 of internal screw 24 to the annular gap between melt sleeve 30S and barrel 26'. The internal threads of barrel 26' then move the melt polymer along the axial extent of the melt section of the extruder screw to the discharge end of the extruder screw.

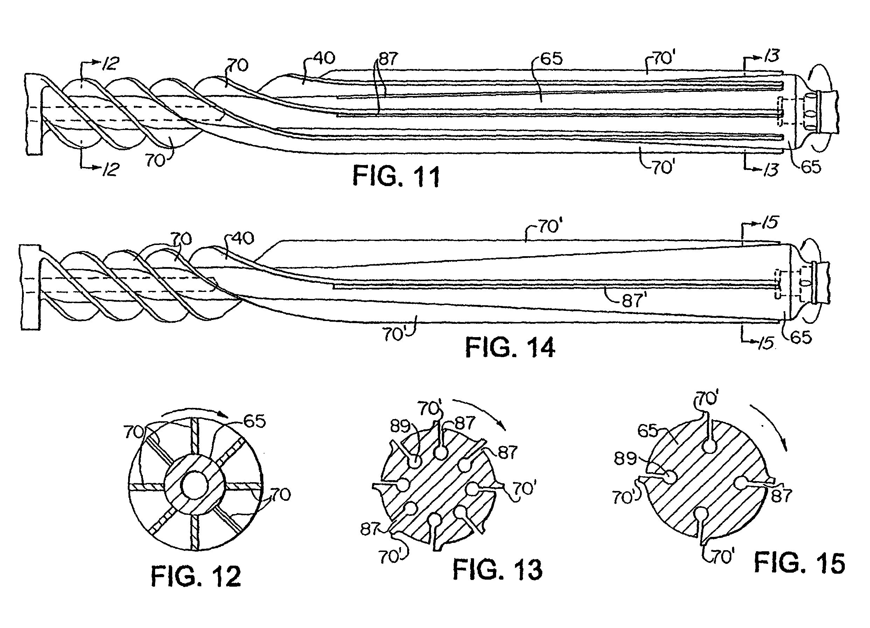

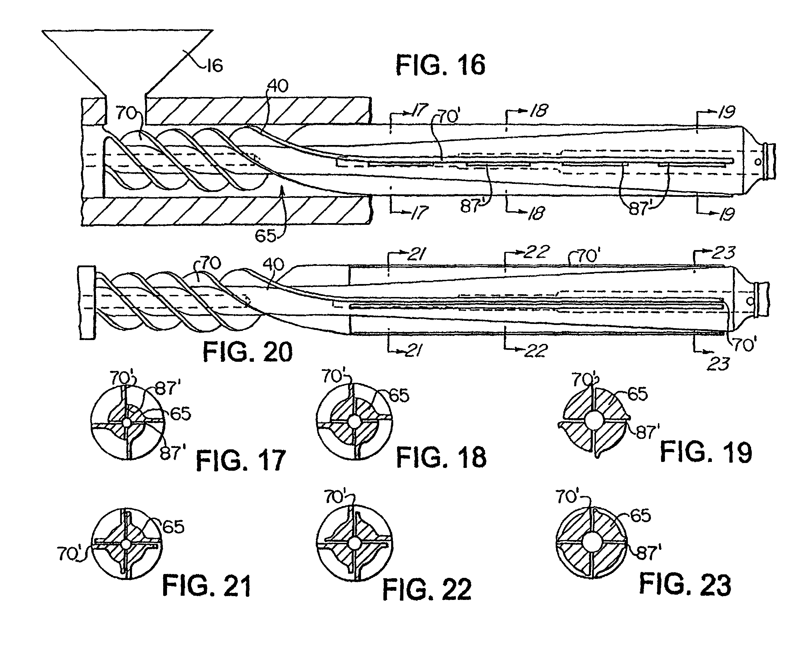

Referring to Figure 11, a sixth embodiment of the present invention is shown, the sixth embodiment employs a driven extruder screw 65 having several flights or threads, generally designated 40, formed of curved spiral upstream components 70 in the feed section which receive and generally the linear downstream components 70' in the melt section provided around the periphery of screw 65 for use in an extruder mechanism such as for example in Fig. 16. In this embodiment, multiple upstream screw threads 70 start in the section feed of the extruder with a helix angle that gradually increases to an infinite value in the melt section such that the downstream thread components 70' in the melt section are substantially linear and parallel to the screw axis. In the embodiment shown in Figure 11, eight threads are provided having eight separate channels therebetween for moving solid polymer materials along the length of the screw 65. The embodiment similar of Figures 14, 16, 20 and 24 employ four threads 40 formed of components 70 and 70' oriented and shaped in essentially the same manner as the threads of the Figure 11 embodiment. The various screws shown in Figures 11, 14, 16, 20 and 24 are all mounted in conventional infeed sections and melt sections barrels provided with external heaters such as shown in Figs 1, 7, 27 etc.

The helix angle on the threads in the infeed section of the screw 65 of the embodiments of Figures 11, 14, 16, 20 and 24 provides the force necessary to keep the solid polymer material moving along the screw 65. Furthermore, the core diameter of the screw 65 increases along the screw toward the discharge end of the screw such that the depth of the channel provided between the screw threads decreases towards the discharge end of the screw. Rotation of the screw 65 shown in Figures 11, 14, 16, 20 and 21 in a clockwise direction as viewed from the left side of the aforementioned figures results in the movement of the solid polymer materials along the screw from the left to the right.

In the embodiment of Figure 11, axially extending radial slots 87 (Fig. 13) are provided along the leading edge of downstream melt section thread components 70' and extend from the outer circumferential surface of the core of the screw 65 radially inwardly to a plurality of internal axially parallel bores 89 as shown in Figure 13. The radial slots 87 extending along the leading edge of screw threads 70' are formed as slots that extend the full axial length of the melt section of the screw, as shown in Figure 11.

The embodiment of Figure 16 differs from that of Figure 11 in that the Figure 16 embodiment has slots 87 all of which terminate at a common axial bore 89' (Fig.17). The figure 16 embodiment also differs from the Figure 11 embodiment in that the slots comprise a series of shorter aligned discrete slot segments 87' provided along the leading edge of dowmstream thread component 70' as shown in Figure 16. Discrete slot segments 87' have a length/width ratio that is greater than 1. The circumferential spacing between the radial slots is determined by the number of threads 40 provided along the length of the screw. For instance, in Figure 13, wherein eight axially extending threads 40 are provided along the screw, radial slots 87 would be spaced at 45° from each other. In the embodiment shown in Figure 15, where there are four axially extending threads 40 provided along the screw, the radial slots 87 would be spaced at 90° from each other.

The provision of a plurality of internal axial bores along the screw corresponding to the number of radial slots 50, as best seen in Figures 13 and 15, provides a further advantage of reducing the radial distance that melted polymer must travel when being removed from the surface of each channel between the threads, and hence, reduces the generation of excessive heat in the melt caused by shear energy dissipation between the melt and the radial passageways.

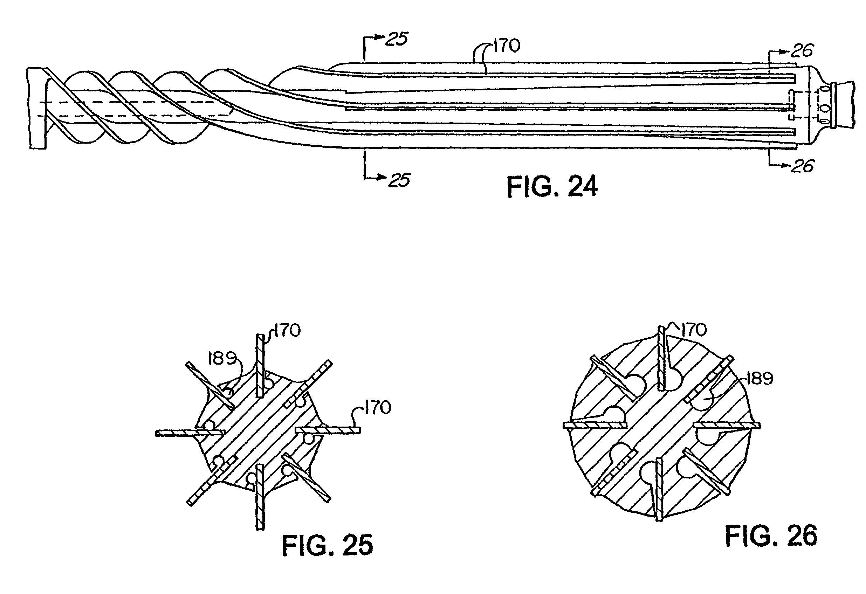

In the embodiment of the present invention shown in Figures 24 through 26, the axial portions of the threads 170 on the screw are formed from separate inserts that are inserted into radial slots extending from the channels between the threads into a plurality of axially parallel bores 189. This embodiment provides the advantages of allowing the threads to be made from a material having a higher hardness that the hardness of the body of the screw, as well as allowing for the machining of the radial slots with an internal angle so that the slots taper from a smaller width at the screw surface to a larger width at the merger with an internal axial bore. The tapered slots further reduce the generation of shear energy as the melt passes through the slots to the internal axial bores, thus preventing the overheating of the melt.

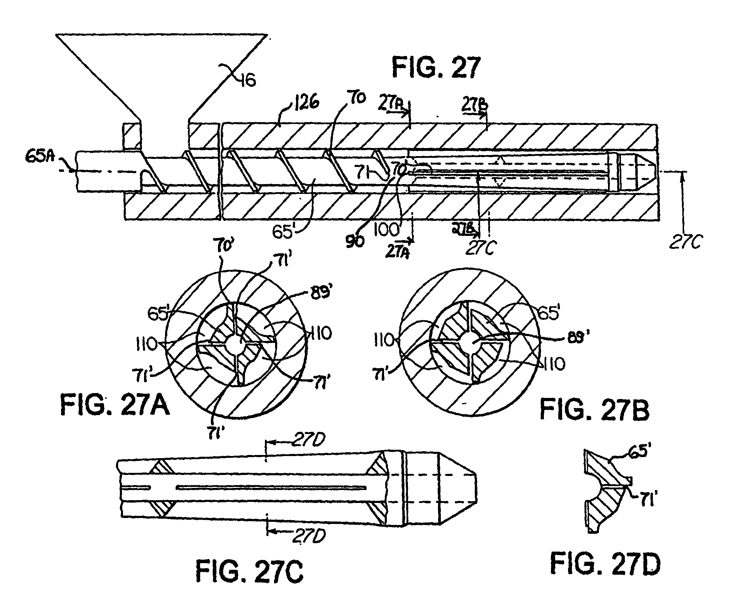

The embodiment of Figure 27 is similar to the embodiment of Figure 16 in employing a barrel 126 having a screw 65' and curved spiral upstream threads 70 in the feed sections of Figure 27 terminating at downstream ends 71. Such termination provides an open flightless or threadless space 90 upstream of the upstream end 100 of the linear downstream threads 70' which are positioned in the melting section. Radial slots 71' are provided adjacent each of the linear downstream threads for drawing polymer melt into bore 89'. The threadless space 90 is in the area where the melting section begins and results in enhanced performance due to the fact that the compacted polymer in the flightless or threadless space becomes one annular mass ensuring that each melting section channel 110 receives an equal volume of resin.

Modifications and variations of the above-described embodiments of the present invention are possible, as appreciated by those skilled in the art in light of the above teachings. For example, the number of threads provided around the internal screw can be varied and the channels along which the solid polymer material and the melted polymer material are moved can be maintained at a constant cross section along the length of the extrude, or can be increased or decreased in cross section along the length of the extrude. It is therefore to be understood that, within the scope of the appended claims and their equivalents, the invention may be practiced otherwise than as specifically described.

## Claims

1. An extruder having a heated barrel (126), a screw (65') surrounded and enclosed by the barrel (126) and having a central axis (65A), an internal axial bore (89') and a plurality of circumferentially spaced curved spiral upstream threads (70) extending externally along a portion of the screw (65'), **characterized by** external linear threads (70') downstream of the upstream threads (70) and which are substantially parallel to the central axis (65A) of the screw (65').

2. The extruder of claim 1, **characterized in that** the curved upstream threads (70) are separated from the linear threads (70') by an open threadless space (90).

3. The extruder of claim 1 or claim 2, further **characterized by** a plurality of axially extending radial slots (71') with each radial slot passing from an external surface of the screw (65) adjacent one of the linear threads (70) to the internal axial bore (89') for removing polymer melt.

4. The extruder of claim 3, **characterized in that** each of the radial slots (71') has a length/width ratio that is greater than 1.

## Patentansprüche

1. Ein Extruder, der einen beheizten Zylinder (126) und eine Schnecke (65') aufweist, die von dem Zylinder (126) umgeben und eingeschlossen ist, und eine Mittelachse (65A), eine Innenaxialbohrung (89') und eine Vielzahl von mit Abstand um den Umfang angeordneten, gekrümmten, spiralförmigen, vorne liegenden Gewinden (70) aufweist, die sich außen entlang eines Teils der Schnecke (65') erstrecken, **gekennzeichnet durch** äußere lineare Gewinde (70'), die hinter den vorne liegenden Gewinden (70) verlaufen, und die im Wesentlichen parallel zur Mittelachse (65A) der Schnecke (65') verlaufen.

2. Extruder gemäß Anspruch 1, **dadurch gekennzeichnet, dass** die gekrümmten vorne liegenden Gewinde (70) von den linearen Gewinden (70') durch einen offenen, gewindefreien Zwischenraum (90) getrennt sind.

3. Extruder gemäß Anspruch 1 oder Anspruch 2, der ferner durch eine Vielzahl von sich axial erstreckenden radialen Schlitzen (71') **gekennzeichnet** ist, wobei jeder radiale Schlitz zum Entfernen von Polymerschmelze von einer Außenfläche der Schnecke (65), die an eines der linearen Gewinde (70) angrenzt, zu der Innenaxialbohrung (89') verläuft.

4. Extruder gemäß Anspruch 3, **dadurch gekennzeichnet, dass** jeder der radialen Schlitze (71') ein Längen-/Breitenverhältnis aufweist, das größer als 1 ist.

## Revendications

1. Une extrudeuse ayant un fourreau chauffé (126), une vis (65') entourée par le fourreau (126) qui l'enferme et ayant un axe central (65A), un alésage axial interne (89') et une pluralité de filets amonts incurvés, en spirale, espacés de façon circonférentielle (70) s'étendant de façon externe le long d'une portion de la vis (65'), **caractérisée par** des filets linéaires externes (70') en aval des filets amonts (70) et sensiblement parallèles à l'axe central (65A) de la vis (65').

2. L'extrudeuse de la revendication 1, **caractérisée en ce que** les filets amonts incurvés (70) sont séparés des filets linéaires (70') par un espace ouvert dépourvu de filets (90).

3. L'extrudeuse de la revendication 1 ou la revendication 2, **caractérisée en outre par** une pluralité de fentes radiales s'étendant de façon axiale (71'), chaque fente radiale allant d'une surface externe de la vis (65) adjacente à l'un des filets linéaires (70) à l'alésage axial interne (89') pour enlever du polymère fondu.

4. L'extrudeuse de la revendication 3, **caractérisée en ce que** chacune des fentes radiales (71') a un rapport longueur sur largeur qui est supérieur à 1.
